(19) Europäisches Patentamt
European Patent Office
Office européen des brevets

(11) EP 4 342 904 A1

(12) EUROPEAN PATENT APPLICATION

(43) Date of publication:
**27.03.2024 Bulletin 2024/13**

(21) Application number: **22196916.5**

(22) Date of filing: **21.09.2022**

(51) International Patent Classification (IPC):
***C07G 1/00*** *(2011.01)* ***C08H 8/00*** *(2010.01)*
***C08L 97/00*** *(2006.01)* ***C08H 7/00*** *(2011.01)*
***C08G 59/06*** *(2006.01)* ***C08G 59/10*** *(2006.01)*

(52) Cooperative Patent Classification (CPC):
**C08H 8/00; C07G 1/00; C08G 59/063; C08G 59/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Wien**
**1010 Wien (AT)**

(72) Inventors:
- **VERDROSS, Philip**
**1090 Vienna (AT)**
- **BISMARCK, Alexander**
**1090 Vienna (AT)**

(74) Representative: **Gassner, Birgitta et al**
**REDL Life Science Patent Attorneys**
**Donau-City-Straße 11**
**1220 Wien (AT)**

# (54) BLACK LIQUOR EPOXY RESIN

(57) The present invention relates to a method for preparing a black liquor epoxy resin from a mixture of black liquor, epichlorohydrin, and a primary or a heterocyclic amine, in the presence of a base. The invention further relates to the use of the black liquor epoxy resin, e.g., as a coating resin, matrix for the production of composite materials, thermosetting polymeric material, polymer blend, or as a lacquer or varnish.

EP 4 342 904 A1

## Description

### Field of the Invention

The present invention relates to the field of lignin-based epoxy resins, specifically to black liquor epoxy resins, thermosetting compositions, composite materials, and methods for preparing such resins, compositions, and materials. Furthermore, the present invention relates to uses of black liquor epoxy resin.

### Background Art

Epoxy resins are synthetic resins carrying epoxide groups. Epoxy resins are used for the production of several different products such as thermosetting polymers or thermoset polymer through the reaction of epoxy resins with themselves or with polyfunctional hardeners.

Thermosets, such as epoxy resins, are base materials for the production of high-quality and expensive polymeric materials which have good mechanical properties as well as good temperature and chemical resistance. Typically, they are used e.g., as reactive and baking enamels, adhesives, for laminates, as embedding agents in metallography and as molding compounds for components in electrical engineering and electronics or as matrix for composite materials.

The raw materials for epoxy resin production are largely petroleum derived.

A renewable alternative could be lignin. Lignin is the most abundant partially aromatic bio-polymer in nature and is a key component of woody plants thereby, lignin is found in the cell walls of plants that grow on land. Lignins protect plants from microbial degradation and help to withstand mechanical force. Lignin is composed mainly of the monomers sinapyl alcohol, coniferyl alcohol and p-coumaryl alcohol, thus possessing phenolic hydroxy-groups, unlike other in plants abundant polymers like cellulose.

Lignin is a direct by-product of wood pulping processes making lignin an excellent source of terrestrial carbon. A by-product from the Kraft process where pulpwood is digested into paper pulp removing lignin, hemicelluloses and other extractives from the wood to free the cellulose fibers is black liquor. Black liquor is an aqueous solution comprising lignin residues, hemicellulose, and the inorganic chemicals used in the process, as well as traces of tall oils.

However, currently known production processes of epoxy resins from lignin as raw material require purified lignin which is free from impurities such as salts, water and sugars. Thereby, waste lignin derived from the common pulp and paper processes such as from Kraft and Soda processes must be purified by e.g., precipitation and deionization [4]. Therefore, waste lignin compositions directly obtained from pulp mills such as black liquor cannot be directly used for the production of epoxy-resins.

US3984363A discloses the preparation of polymerizable oxirane derivatives of lignin from black liquor. However, the products obtained are solids. In the context of epoxide-based polymers a liquid precursor to the polymerized material is highly desirable, due to the possibility of impregnation of fabrics or fibers and molding. Furthermore, the currently known approaches require long reaction times.

Therefore, there is still the need for a method for producing epoxy-resins directly from lignin, especially from waste products such as from black liquor in an energy efficient manner. Furthermore, liquid products are needed to produce high performance composite materials.

### Summary of invention

It is the object of the present invention to provide a method for preparing epoxy resins from black liquor. The object is solved by the subject-matter of the present invention.

According to the invention, there is provided a method for preparing a black liquor epoxy resin, comprising

a. preparing a mixture of black liquor, epichlorohydrin, and a primary or a heterocyclic amine,
b. heating the mixture to its reflux point,
c. adding a base to the mixture,
d. continue to heat the mixture at reflux, and
e. separating the black liquor epoxy resin from the mixture.

According to one embodiment of the invention, the primary amine is aniline and the heterocyclic amine is pyridine.

A further embodiment relates to the method as described herein, wherein the base is selected from the group consisting of a metal base, an alkali metal base, an alkaline earth metal base, an organic carbonate, an inorganic carbonate, a hydroxy organic base, an organic amine, an alkoxide, an organic base, aliphatic amines, aromatic amines, heterocyclic amines, and mixtures thereof.

Specifically, the base is sodium hydroxide, potassium hydroxide, calcium hydroxide, magnesium hydroxide,

lithium hydroxide, aluminum hydroxide, cesium hydroxide, sodium oxide, potassium oxide, calcium oxide, magnesium oxide, lithium oxide, cesium oxide, sodium carbonate, potassium carbonate, calcium carbonate, magnesium carbonate, lithium carbonate, cesium carbonate, ammonium carbonate, sodium methoxide, sodium isopropanolate, sodium ethoxide, potassium methoxide, potassium isopropanolate, potassium ethanolate, triethylamine, diazabicycloundecene (DBU), dimethylaminopyridine (DMAP), piperidines, piperazines, pyridine, pyridine derivatives, picolines, lutidines, collidines, 1,4-diazabicyclo[2.2.2]octan (DABCO), imidazole, a derivative thereof, or a mixture thereof.

According to one embodiment of the invention, the ratio of black liquor to epichlorohydrin is in the range of 0.5:2 to 2:0.5 (v/v), preferably 1:1 (v/v).

A further embodiment relates to the method as described herein, wherein the ratio of black liquor to amine is in the range of 100:1 to 25:1 (v/v).

According to one embodiment of the invention, the black liquor epoxy resin is separated from the reaction mixture by extraction with an organic solvent.

According to the invention, there is further provided a black liquor epoxy resin comprising etherified lignin, an ammonium salt and/or an amine.

According to one embodiment of the invention, the black liquor epoxy resin described herein is a liquid.

According to the invention there is further provided the use of the black liquor epoxy resin as described herein as a coating resin, matrix for the production of composite materials, thermosetting polymeric material, polymer blend, or as a lacquer or varnish.

According to the invention there is further provided a thermosetting composition comprising the cured black liquor epoxy resin described herein.

Specifically, thermosetting composition described herein having a decomposition temperature ranging from 80° to 300 °C and glass transition temperatures ranging from -80°C to above 200° C.

According to the invention there is further provided a method for preparing a thermosetting composition as described herein, comprising the step of curing the black liquor epoxy resin obtained by the method as described herein with an acid, an acid anhydride, a thiol, or an amine as curing agent.

According to the invention there is further provided a composite material comprising the black liquor epoxy resin as described herein.

Specifically, the composite material as described herein further comprises a cellulose-based material.

## Brief description of drawings

Fig. 1 depicts the proposed mechanism of BLER synthesis from ECH and BL and the corresponding oxirane and bis-phenoxy signals in the $^1$H NMR of BLER.

Fig. 2 shows a duck-figurine made of BLER cured with maleic anhydride and cast in a silicon mold and.

Fig. 3 shows SEM images at different magnifications of fracture surfaces of cured BLER-MA. Samples were coated with gold to assure conductivity. The same area was recorded at different magnifications.

Fig. 4: Scanning electron micrograph of solid BLER-paper composite cured with maleic anhydride.

## Description of Embodiments

The present invention provides an improved method for preparing a black liquor epoxy resin.

According to one embodiment, the herein described method for preparing the black liquor epoxy resin is energy efficient since the energy required to separate the solvent from the resin is considerably lower compared to other approaches. The present method provides the advantage that lignin does not have to be separated from water since water has a higher vapor pressure (and heat capacity) than an organic solvent such as dichloromethane or ethyl acetate at a given temperature. Furthermore, the product itself does not need any purification after extraction from the reaction mixture with the organic solvent other than evaporation of said organic solvent.

According to one embodiment, the method described herein for preparing a black liquor epoxy resin provides a yield of 80% by weight based on the dry mass content of black liquor. Furthermore, the bio-based carbon content is expected to be in the range of 45-90 wt.%.

The term "black liquor" as used herein refers to the spent liquor from a wood pulping process, such as the Kraft process in which pulpwood is converted into paper pulp by removing lignin, hemicellulose constituents, and other extractable materials from wood to free the cellulose fibers. Black liquor comprises an aqueous solution of lignin residues, hemicellulose, and the inorganic chemical used in the process and 15% w/w solids of which 10% w/w are inorganic and 5% w/w are organic. Typically, the organic constituents in black liquor are 40%-45% w/w soaps, 35%-45% w/w lignin, and 10%-15% w/w other (miscellaneous) organic materials. [5] The terms "black liquor", "thick liquor", "Kraft lignin" or

"Kraft-lignin" may be used interchangeably herein, assuming black liquor as a solution of extracted lignin and lignols in water.

The term "epoxy resin" is commonly known in the field and refers to a molecule containing more than one epoxy group capable of being converted to a thermoset form. Such an epoxy group is also referred to as epoxide or, according to IUPAC nomenclature, to as oxirane.

In general, epoxy resins are reactive intermediates that are cured or crosslinked by polymerization into a three-dimensional network with co-reactants. These co-reactants are also referred to as curing agents.

The term "black liquor epoxy resin", abbreviated herein as "BLER", refers to an epoxy resin produced from black liquor as raw material according to the method described herein.

According to one embodiment, in the black liquor epoxy resin described herein the epoxy equivalent weight of resins ranges from 550 to 2000 g/mol (given as grams of resin that contain a mol of oxirane). Specifically, these values can be determined e.g., by titration of the resins with hydrochloric acid in acetone or following an equivalent procedure.

According to a specific embodiment, the black liquor epoxy resin produced by the method described herein is a liquid.

The term "liquid" as used herein refers to a fluid which is nearly incompressible and conforms to the shape of its container but retains a nearly constant volume independent of pressure. In other words, a liquid is not solid.

According to an alternative embodiment, the black liquor epoxy resin produced by the method described herein is a solid.

The term "solid" as used herein refers to a state of matter that retains its shape and density when not confined.

According to one embodiment, a method is described for preparing a black liquor epoxy resin, comprising

a. preparing a mixture of black liquor, epichlorohydrin, and an amine,
b. heating the mixture to its reflux point,
c. adding a base to the mixture,
d. continue to heat the mixture at reflux, and
e. separating the black liquor epoxy resin from the mixture.

The term "mixture" as used herein refers to a material made of two or more different chemical substances which are not chemically bonded when preparing the mixture. A mixture may be e.g., a solution, a suspension, or an emulsion.

The term "emulsion" as used herein refers to a mixture of two or more liquids normally forming liquid-liquid phase separation. Thereby, an emulsifier stabilizes an emulsion.

The term "epichlorohydrin" or "ECH" as used herein refers to an epoxide that is 1,2-epoxypropene in which one of the methyl hydrogens is substituted by chlorine. The term includes a racemic mixture or a pure isomer. It is an organochlorine compound and an epoxide. According to IUPAC nomenclature, epichlorohydrin is termed: 2-(chloromethyl)oxirane. The chemical structure of epichlorohydrin is shown in the following:

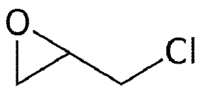.

According to a specific embodiment, the black liquor is emulsified with epichlorohydrin and an amine.

According to one embodiment, the amine serves as emulsifying agent and catalyst.

According to one embodiment, in the method described herein the amine is a primary or a heterocyclic amine.

According to a specific embodiment, in the method described herein the primary amine is aniline.

The term "aniline" as used herein refers to the chemical compound shown in the following structure

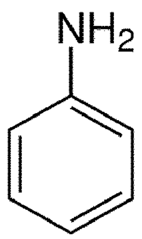.

According to a specific embodiment, in the method described herein the heterocyclic amine is pyridine.

The term "pyridine" as used herein refers to the chemical compound shown in the following structure

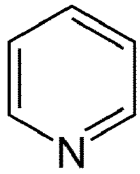
.

The term "amine" as used herein refers to a compound that contains a basic nitrogen, having a lone pair of electrons. Thereby, a lone pair is a pair of valence electrons that are not shared with another atom in a covalent bond. A lone pair is also called an unshared pair or non-bonding pair. Formally, an amine is derivative of ammonia ($NH_3$), wherein one or more hydrogen atoms have been replaced by a substituent such as e.g., an alkyl or an aryl group. Amines are categorized into three categories based on the number of carbon atoms adjacent to the nitrogen. The term "primary amine" as used herein refers to an amine in which one of the three hydrogen atoms in ammonia is replaced by a substituent. For example, aniline is a primary amine. In secondary amines, two of the three hydrogen atoms in ammonia are replaced by a substituent. For example, dimethylamine is a secondary amine. In tertiary amines, all hydrogen atoms in ammonia are replaced by a substituent. For example, trimethylamine is a tertiary amine.

The term "heterocyclic amine" as used herein refers to a chemical compound containing at least one heterocyclic ring, which has atoms of at least two different elements, as well as at least one amine group. For example, pyridine is a heterocyclic amine.

Non-limiting examples of heterocyclic amines are piperazine, aminoethylpiperazine, piperidine, morpholine, N-ethylmorpholine, hexamethylenetetraamine, triethylenediamine, diazabicycloundecene, pyridine, picoline, imidazole, pyrazole, triazole and tetrazole.

Other examples of amines are aliphatic amines. Suitable examples of aliphatic amines are ethylenediamine, diethylenetriamine, triethylenetetraamine, tetraethylene-pentaamine, mono propylamine, dipropylamine, monobutylamine, dibutylamine, octylamine, laurylamine, triethylamine, tetramethylenediamine, hexamethylenediamine, monoethanolamine, diethanolamine, triethanolamine; isopropylamine, isobutylamine and diisobutylamine.

Other examples of amines are alicyclic amines. Suitable alicyclic amines are cyclohexylamine, dicyclohexylamine, cyclopentylamine and bisaminomethyl cyclohexane.

Other examples of amines are aromatic amines. Aromatic amines are aniline, phenylenediamine, dimethylaniline, monomethylaniline, toluidine, anisidine, diphenylamine, benzidine, phenetidine, tolidine, benzylamine, xylylenediamine, tolylenediamine and diphenylmethane-diamine.

According to one embodiment, in the method for preparing a black liquor epoxy resin the amine forms an adduct with epichlorohydrin.

According to one embodiment, in the method for preparing a black liquor the amine adducts formed with epichlorohydrin remain in the resin.

According to a specific embodiment, the amine adducts formed with epichlorohydrin remain in the resin and serve as a catalyst for further reactions to prepare e.g., thermosetting polymers.

According to one embodiment, the black liquor epoxy resin described herein comprises amine adducts formed with epichlorohydrin. Specifically, such amine adducts serve as catalysts that help polymerization with the curing agent, e.g., with carboxylic acid anhydrides.

The term "heating" as used herein refers to increasing the temperature.

The term "reflux point" as used herein refers to the temperature at which the vapor pressure of the liquid equals the pressure surrounding the liquid and the liquid changes into a vapor. In other words, the liquid starts to boil.

According to one embodiment, heating the mixture at reflux involves heating the mixture for a specific amount of time, while the produced vapor is continually cooled and returned to the mixture.

According to one embodiment, the base is added to the mixture according to the method described herein. Thereby, the base can be added in solid or liquid form.

According to a specific embodiment, the base is added as a pure liquid substance.

The term "pure liquid substance" as used herein in the context of adding a base to the reaction refers to a solution made of only one type of molecule.

According to one embodiment, a pure liquid substance may be a liquid substance having a high purity such as e.g., a 90, 95, 96, 97, 98, 99, or 100% solution of a base.

According to one embodiment, the base is added to the mixture as an aqueous or non-aqueous solution.

The term "aqueous solution" as used herein refers to a solution in which the solvent is water.

The term "non-aqueous solution" as used herein refers to a solution in which the solvent is a liquid at room temperature but not water.

The term "base" is generally known in the art and is defined according to Arrhenius bases, Bronsted bases, and Lewis bases. For example, according to the Lewis theory, a base is an electron pair donor which can share a pair

of electrons with an electron acceptor described as a Lewis acid.

The term "metal base" as used herein refers to a base comprising a metal. For example, metal hydroxides are metal bases and consist of a hydroxide anion and a metal cation e.g., sodium hydroxide, potassium hydroxide, calcium hydroxide, magnesium hydroxide, lithium hydroxide, aluminum hydroxide and cesium hydroxide. As another example, metal oxides are metal bases e.g., sodium oxide, potassium oxide, calcium oxide, magnesium oxide, lithium oxide and cesium oxide,

The term "alkali metal base" as used herein refers to a base comprising an alkali metal. For example, alkali metal hydroxides consist of a hydroxide anion and an alkali metal cation e.g., sodium hydroxide, potassium hydroxide, lithium hydroxide, and cesium hydroxide. As another example, alkali metal oxides are alkali metal bases e.g., sodium oxide, potassium oxide, lithium oxide, and cesium oxide. Alkali metals are lithium, sodium, potassium, rubidium, cesium, and francium.

The term "alkaline earth metal base" as used herein refers to a base comprising an alkaline earth metal. For example, alkaline earth metal hydroxides consist of a hydroxide anion and an alkaline earth metal e.g., calcium hydroxide, magnesium hydroxide. As another example, alkaline earth metal oxides are alkaline earth metal bases e.g., calcium oxide, magnesium oxide. The alkaline earth metals are beryllium, magnesium, calcium, strontium, barium, and radium.

The term "inorganic carbonate" as used herein refers to an inorganic molecule comprising a carbonate ion with the formula $CO^{2-}{}_3$. Non-limiting examples of inorganic carbonates are sodium carbonate, potassium carbonate, calcium carbonate, magnesium carbonate, lithium carbonate, cesium carbonate, and ammonium carbonate.

The term "organic carbonate" as used herein refers to an organic molecule comprising a carbonate ion with the formula $CO^{2-}{}_3$. Non-limiting examples of organic carbonates are carbonates of nitrogen containing organic amines such as ammonia, methylamine, aniline, phenylenediamine, dimethylaniline, monomethylaniline, toluidine, anisidine, diphenylamine, benzidine, phenetidine, tolidine, benzylamine, xylylenediamine, tolylenediamine, diphenylmethane-diamine, cyclohexylamine, dicyclohexylamine, cyclopentylamine and bisaminomethyl cyclohexane.

The term "hydroxy organic base" as used herein refers to an organic molecule comprising a hydroxy group with the chemical formula -OH.

The term "alkoxide" as used herein refers to the conjugate base of an alcohol and consists of an organic group bonded to a negatively charged oxygen atom. Alkoxides are commonly referred to as $RO^-$. Alkali metal alkoxides are e.g., sodium methoxide, sodium isopropanolate, sodium ethoxide, potassium methoxide, potassium isopropanolate and potassium ethanolate.

The term "organic base" as used herein refers to an organic compound which acts as a base. Organic bases are e.g., aliphatic, aromatic or heterocyclic amines such as triethylamine, diazabicycloundecene (DBU), dimethylaminopyridine (DMAP), piperidines, piperazines, pyridine and pyridine derivatives such as picolines, lutidines or collidines, 1,4-diazabicyclo[2.2.2]octan (DABCO), or imidazole.

According to one embodiment, the ratio of black liquor to epichlorohydrin is in the range of 0.5:2 to 2:0.5 (v/v).

According to a specific embodiment, the ratio of black liquor to epichlorohydrin is 0.5:2 (v/v), 1.0:2 (v/v), 1.5:2 (v/v), 2:1.5 (v/v), 2:1.0 (v/v), 2:0.5 (v/v), or 1:1 (v/v).

According to a specific embodiment, the ratio of black liquor to epichlorohydrin is 1:1 (v/v).

For example, a ratio of e.g., black liquor to epichlorohydrin of 1:1 (v/v) means that an equal volume of black liquor and epichlorohydrin, e.g., 100 mL of black liquor and 100 mL of epichlorohydrin are mixed according to the method described herein.

According to one embodiment, the ratio of black liquor to amine is in the range of 100:1 to 25:1 (v/v).

According to a specific embodiment, the ratio of black liquor to amine is 100:1, 95:1, 90:1, 85:1, 80:1, 75:1, 70:1, 65:1, 60:1, 55:1, 50:1, 45:1, 40:1, 35:1, 30:1, or 25:1 (v/v).

The term "separating" as used herein refers to a step of converting a mixture or solution of chemical substances into two or more distinct products.

According to one embodiment, the black liquor epoxy resin is separated from the reaction mixture by extraction with an organic solvent.

According to a specific embodiment, the black liquor epoxy resin described herein is a liquid and extractable with an organic solvent, e.g., with dichloromethane, as described in the herein provided method.

According to a specific embodiment, a solid black liquor epoxy resin can be separated from the mixture by filtration.

According to a specific embodiment, in the step of extracting the liquid black liquor epoxy resin from the reaction mixture, a solid fraction of black liquor epoxy resin can be separated from the mixture e.g., by filtration.

According to one embodiment, a fraction of the black liquor epoxy resin obtained by the method described herein is solid.

According to a specific embodiment, the solid black liquor epoxy resin can be processed further to a composite material.

According to a specific embodiment, the liquid black liquor epoxy resin can be processed further to a composite

material.

According to one embodiment, both solid and liquid fractions of the black liquor epoxy resin can be individually further processed e.g., for the production of a thermosetting composition, a composite material, or any other product obtained from black liquor epoxy resin as described herein.

According to a specific embodiment, a suitable organic solvent for extraction of the black liquor epoxy resin from the reaction mixture may be esters such as ethyl acetate, halogenated solvents such as chloroform or dichloromethane, amides such as N,N-dimethylformamide or N,N-dimethylacetamide or ethers such as diethyl ether, ethyl-isopropyl ether or methyl-butyl ether.

According to a specific embodiment, the black liquor epoxy resin is extracted by dichloromethane.

The term "etherified" as used herein refers to a compound in which a chemical group such as a hydroxyl group (-OH) is converted into an ether. In an ether an oxygen atom is connected to two carbon atoms directly, that make part of an alkyl or aryl group for example. An "ether" has the general formula R-O-R', wherein R and R' are representing the alkyl or aryl groups.

The term "ammonium salt" as used herein refers to ammonium cation that is the molecule shown in the following chemical formula

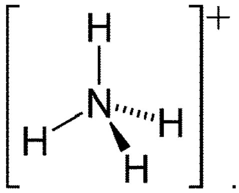

.

The term "coating resin" as used herein refers to a resin used to coat materials. Thereby, in general, it is intended to improve the physical properties e.g., to make materials water-proof, easier to clean etc.

According to one embodiment, the black liquor epoxy resin described herein can be used as a coating resin, as a matrix for the production of composite materials, as a thermosetting polymeric material, as a polymer blend, as a lacquer, and as a varnish.

According to one embodiment, the black liquor epoxy resin described herein can be used as matrix in or for advanced carbon fiber reinforced composites.

As used herein, advanced carbon fiber reinforced composite refers to materials which consist of at least two identifiable different materials, that combined together have an engineering performance that exceeds that of the individual components. The resin transfers load and protects the fibers. Carbon fibers can be made from lignin but so could be the matrix. Specifically, the resin described herein is liquid and has attractive properties when cured. Conventional resin molding methods can be used to manufacture composite parts with properties comparable to conventional, state of the art, composites.

The term "composite material" as used herein refers to a material produced from two or more constituent materials. Thereby, these different constituent materials have dissimilar chemical or physical properties. In the finished composite material, the individual elements remain separate and distinct which distinguishes composite materials from mixtures and solutions.

A "matrix for the production of composite materials" is a homogenous material in which a fiber systems of a composite is embedded.

The term "thermosetting" as used herein refers to the property of a material e.g., of a polymer which irreversibly becomes rigid when heated.

The term "polymer blend" as used herein refers to a mixture of two or more different polymers or monomers that are polymerized after mixing them.

The term "decomposition temperature" as used herein refers to the temperature at which the substance chemically decomposes into volatiles like vapors, dust or gas.

According to one embodiment, the thermosetting compositions has a decomposition temperature ranging from 80 to 300 °C. Specifically, the thermosetting compositions has a decomposition temperature of 80, 90, 100, 150, 200, 250, or 300 °C. Specifically, the thermosetting composition decomposes in stages.

According to one embodiment, the thermosetting composition has one or more glass transition temperatures in the range from -80 to 200 °C or even higher. Specifically, the thermosetting composition has a glass transition temperature from - 80, -70, -60, -50, -40, - 30, -20, -10, 0, 10, 20, 30, 40, 50, 60, 70, 80, 90, 100, 110, 120, 130, 140, 150, 160, 170, 180, 190, 200 °C, or even higher.

According to one embodiment, the glass transition temperature depends on the curing agent used and of the process of curing.

According to one embodiment, the thermosetting compositions may have at least Young's moduli 2 ± 1 GPa and at least a tensile yield stresses up to 40 MPa.

According to one embodiment, the thermosetting composition has the following mechanical properties: a Youngs modulus of 1.3 GPa and a yield stress of 40 MPa.

According to one embodiment, the thermosetting composition has a molecular weight in the range of 100 to 100'000 g/mol before being polymerized to form a thermoset.

According to one embodiment, the method for preparing the thermosetting composition described herein comprises curing the black liquor epoxy resin obtained by the method described herein with curing agent.

According to one embodiment, the curing agent used in the method described herein is an acid, an acid anhydride, an amine, a diamine, or a polyamine.

According to a specific embodiment, the curing agent used in the method described herein is selected from the group of bi- or pluri-functional aromatic, alicyclic, aliphatic carbonic acid anhydrides and amines.

According to a specific embodiment, the curing agent used in the method described herein is maleic anhydride.

According to another embodiment, used in the method described herein is an amine, a diamine, or a polyamine. Non-limiting examples of amines as curing agents are isophorondiamin, DICY (dicyandiamid), TETA (triethyltetramin, MXDA (methaxylendiamin), AEP (N-aminoethylpiperazin), NBDA (norbornandiamin), melamin, and phenylbiguanidin.

The term "curing" as used herein refers to a process of cross-linking the polymer chains of polymer chains and thereby toughening and hardening the polymer material. Epoxy resins are typically cured by the use of additives, often called hardeners. These additives are herein referred to as "curing agents".

According to one embodiment, a composite material is provided comprising the black liquor epoxy resin described herein.

According to one embodiment, the black liquor epoxy resin is cured with the respective curing agent in a ratio by weight of 3 parts black liquor epoxy resin to one part curing agent.

According to one embodiment, curing is performed at a temperature in the range from 70 to 180 °C. Specifically, curing is performed at a temperature of 70, 80, 90, 100, 110, 120, 130, 140, 150, 160, 170, or 180 °C.

According to one embodiment, the curing time is up to 24 h.

According to one embodiment, the composite material described herein further comprises a cellulose-based material.

According to one embodiment, the black liquor epoxy resin described herein can be combined with cellulose based materials to produce foamed composites, papers, textiles, or cellulose powders.

Examples

The Examples which follow are set forth to aid in the understanding of the invention but are not intended to, and should not be construed to limit the scope of the invention in any way. The Examples do not include detailed descriptions of conventional methods. Such methods are well known to those of ordinary skill in the art.

**Example 1 - Black liquor epoxy resin synthesis**

**Materials**

The following chemical compounds were used in the examples: Epichlorohydrin (ECH, 96%), magnesium sulfate, NaOH, deuterated chloroform, and deuterium oxide were purchased from Sigma Aldrich (Merck), aniline (96%) and maleic acid anhydride (MA) from Tokyo Chemical Industries (TCI), and dichloromethane, as well as hydrochloric acid (37%) from VWR. Black liquor (BL) used in this set of experiments was directly obtained from a pulping mill. The dry mass of 30 mL BL was 6 g. The dry mass of BL was obtained by removing water at 1 mbar and 90°C until constant weight was achieved. Phenolphthalein for titration was bought from Fluka Germany.

**Methods**

**Synthesis of black liquor epoxy resin (BLER)**

A mixture of 300 mL ECH, 6.5 mL aniline and 300 mL BL were stirred mechanically at 450 rpm until reflux. The two phases formed an emulsion after 5 min. Then 200 mL of distilled water containing 45 g of NaOH was added at constant rate over 30 min using a dropping funnel. After addition of NaOH solution the mixture was stirred at reflux for an additional 1.5 h (2 h in total at reflux). The reaction mixture was then extracted three times with 250 mL dichloromethane. The combined organic phase was filtered and dried over magnesium sulfate. After removal of magnesium sulfate by filtration, the organic phase was separated from dichloromethane and ECH using a rotary evaporator at 70°C and at

pressures below 1 bar. 27 mL (9 wt.% of the initially used amount) of ECH and all of the dichloromethane were recovered after distillation. The product was dried until constant weight at 1 mbar and 110°C for 3 h in a vacuum oven. After 3 h no further loss of mass was found to happen.

A corresponding amount of potassium hydroxide, calcium hydroxide, or any other base as described herein could be used to substitute sodium hydroxide.

**Nuclear magnetic resonance spectroscopy (NMR)**

All spectra were recorded at 298 K on a Bruker AVANCE™III HD (600 MHz $_1$H frequency). The internal solvent peaks of deuterated chloroform or deuterium oxide were used as reference peaks for all recorded spectra. Titrated samples were extracted with 50 mL dichloromethane in two portions. The combined organic layers were washed with deionized water and dried over magnesium sulfate, which was removed via filtration after drying. The solvent was removed on a rotary evaporator at low pressure. The sample was further dried to constant weight at 100°C and 10 mbar in a vacuum oven, before being dissolved in deuterated chloroform to record the corresponding spectra. To record NMR spectra of partially cured samples from a DSC experiment, the aluminum crucible was opened and sonicated in deuterated chloroform for 5 min at 20°C. The resulting solution was filtered through a syringe filter and 0.7 mL of the solution were used to record an NMR spectrum. NMR spectra were processed and evaluated using the software package MestReNova 14.1.2.

**Attenuated total reflection Fourier-transformed infrared spectroscopy (ATR-FT-IR)**

All infrared spectra were recorded on a Bruker Platinum II spectrometer. The OPUS software package (Bruker Corporation) was used to analyze the recorded datasets. The range of wavenumbers scanned was from 400-4000 cm-1. Data points were recorded with a resolution of 4 cm-1 and 32 scans were obtained and averaged. Analytes were pre-dried *in vacuo* for 24 h at 21°C and were used as finely ground powder or in the case of liquid samples as thin films.

**Scanning electron microscopy (SEM)**

Samples were broken by hand to create fracture surfaces. Then the samples were placed onto conductive tape and sputter-coated with a thin film of gold using a FINE COATER (Jeol-1200) at a current of 30 mA for 30 s. SEM micrographs were recorded using JMC-6000 SEM at an anode voltage of 15 kV.

**Differential scanning calorimetry (DSC)**

A TA Instruments Differential scanning calorimeter was used to record all datasets. The analytes were placed into non-hermetic T-zero aluminum crucibles. The data points were recorded under constant nitrogen gas flow (5 mL min-1). To analyze the obtained data-sets TA-DSC software was used.

**Titration of the oxirane content of BLER and calculation of epoxy-equivalent weights (EEW)**

Titration was carried out following the procedure of He et al. (2014);[1] in brief a NaOH stock solution of 3000 mg dissolved in 500 mL (0.1500 mol L-1) deionized water was prepared in a volumetric flask. 3 mL HCl (37%) was diluted with acetone to 100 mL in a volumetric flask. An aliquot of sample was dissolved in 10 mL of the HCl/acetone (HCl/Ac) solution and sonicated at 21°C for 5 min. The samples and stock HCl/Ac solutions were then titrated with NaOH stock solution. The indicator used was phenolphthalein. 1 mg of indicator was dissolved in 10 mL deionized water and approximately 0.2 mL of indicator solution was added to each titration. The volume of NaOH stock required to induce a change of color that was stable for more than 10 s was recorded. The volume difference of stock solution used between sample and HCl/Ac-stock solution was used to determine the EEW. Sample solution and HCl/Ac solutions were titrated five times and the average reported. Epoxy values (EV) were calculated using Equation 1, where $\Delta V$ is the difference in volume of stock solution required to titrate the sample and the HCl/Ac solutions, respectively. W is the weight in mg of sample in an aliquot in g and N is the concentration of the stock solution in mol L-1. For each titration an aliquot of 4 mL was used. An approximate mass of 0.4 g of resin was used to make a stock solution in HCl/Ac, from which aliquots of 4.0 mL were titrated. The minimal difference of volume that was recorded was 0.1 mL. The epoxy-equivalent weight (EEW) was calculated using Equation 2.

*Equation 1* $$EV = \frac{\Delta V \times N}{10 \times W}$$

$$Equation\ 2 \qquad EEW = \frac{100}{EV}$$

**Formulation, curing of BLER-MA-resin**

Three parts of BLER were mixed with one part of MA by weight and heated up to 60°C for 1 min. MA dissolves completely in the resin during heating. The resulting ready-to use resin has a pot life of >24 h at room temperature. Resin-hardener mixtures were cured for 24 h at 90°C and post-cured for 12 h at 140°C in an oven.

**Thermogravimetric analysis (TGA)**

For a measurement a mass of approximately 10 mg of sample was used, which was powdered prior to analysis. Samples were heated in a constant stream of 10 mL min-1 of air in a TGA 5500 (TA Instruments). Platinum crucibles were used. Samples were heated from 50°C to 700°C in an oxygen atmosphere and no detectable residual mass was observed above 700°C.

**X-ray photoelectron spectroscopy (XPS)**

XPS signals were assigned using the NIST X-ray Photoelectron Spectroscopy Database [2]. X-ray photoelectron spectroscopy (XPS) was performed on a Nexsa Photoelectron Spectrometer (Thermo Scientific, UK). For each sample a survey spectrum was collected with a step size of 1 eV and a pass energy of 200 eV. Furthermore, element specific high-resolution spectra for Carbon (C1s 279-298 eV) Nitrogen (N1s 392-410 eV), Oxygen (O1s 525-545 eV), Chlorine (Cl2p 190-210 eV) and Sulphur (S2p 157-175 eV) with step sizes of 0.1 eV and a pass energy of 50 eV were acquired. All measurements were performed using Al-K$\alpha$ X-rays with a spot size of 400 $\mu$m.

**Elemental analysis (EA)**

EA was performed using a Eurovector EA 3000 CHNS-O Elemental Analyser by the microanalytical laboratory of the University of Vienna.

**Tensile tests**

Tensile tests were carried out according to ASTM D638. Dog bone shaped samples were used. Tests were carried out at 21°C an 50% relative humidity. An Instron 5969 universal testing device with a 50 kN load cell was used.

**Results**

**Chemical characterization of BLER**

BLER was formed by refluxing BL, aniline and ECH while mechanically stirring, producing a viscous emulsion. After removal of all volatile components, a liquid resin was obtained. From 300 mL of BL with a dry mass of 60 g, a 68 % mean yield of liquid BLER was obtained, with the highest yield being 82.5%. A mean volume of 27 mL ECH was recovered by distillation after synthesis, corresponding to 9% of the initial amount. Inorganic salts that formed during the synthesis were separated as aqueous solution. Aniline was not recovered after the reaction and was found in cured resins as ammonium salt or amine.

The mechanism (see Scheme 1 in Fig. 1) of derivatization to obtain BLER proceeds *via the* deprotonation of phenols contained in BL by NaOH. The resulting phenolate anions react with ECH. Also 1,3-diphenoxypropan-2-ol units, as confirmed by NMR (Scheme 1), are formed in the process. The glycidyl-moiety gave five signals due to its strained structural conformation. The terminal secondary protons, H4 and H5, were multiplets at shifts of $\delta$ = 2.87 - 2.71 and 2.66 - 2.55 ppm. Proton H3 was assigned to a multiplet at $\delta$ = 3.27 - 3.15 ppm. Protons H1 and H2 were assigned to multiplets at shifts of $\delta$ = 4.19 - 4.04 ppm. The pentet at a shift of $\delta$ = 4.11 ppm and the doublet at $\delta$ = 3.69 ppm were assigned to 1,3-diphenoxypropan-2-ol-moieties (H7 and H6, respectively). The integrals of all signals match the proposed structures of BLER and were not present in a $^1$H NMR of native BL. Cross signals for quaternary aromatic carbons and nuclei associated with glycidyl groups and 1,3-diphenoxypropan-2-ol-moieties were both found, assuring the derivatization of phenols present in BL. Shifts assigned to the aniline derivates used as catalyst were also observed in the $^1$H NMR spectrum at $\delta$ = 7.55 ppm (m), 7.44 (m) ppm and 7.38 ppm (m). No signals of native aniline were identified post-reaction. No cross-signals of nuclei related to aniline could be found in any 2D NMR experiments due to low concentrations of

the underlying compounds. Shifts associated to ECH were also not found in $^1$H NMR spectrum of BLER.

After comparing spectral data [3] of 1-chloro-3-phenoxypropan-2-ol, no equivalent shifts could be identified with certainty in the $^1$H NMR spectrum of BLER due to low concentration of such structures. All signals that were found and could be clearly identified are listed in the following Table 1 which shows $^1$H NMR data and recorded cross signals of 2D HSQC-, 2D COSY- and 2D HMBC-experiments of BLERs glycidyl moiety, recorded in chloroform-d.

**Table 1**

| | **Atom Identifiers $^1$H [δ $^1$H, multiplicity, coupling constants, integral]** | **$^{13}$C [δ $^{13}$C]** | **COSY [δ $^1$H, nucleus; δ $^1$H, nucleus]** | **HMBC [δ $^1$H, δ $^{13}$C nucleus]** |
|---|---|---|---|---|
| 1, 2 | 4.19 - 4.04, m, 2H | 69.49 | 4.08, H1/2; 2.61, H4/5 4.10, H1/2; 3.19, H3 | 45.73, C4/5 |
| 3 | 3.27-3.15, m, 1H | 57.95 | 3.23, H3; 4.08, H1/2 | 148.27, 8; 69.49, C1/2; 45.73, C4/5 |
| 4, 5 | 2.87 - 2.71 m, 1H/2.66-2.55, m, 1H | 45.73 | 2.61, H4/5; 4.08, H1/2 | - |
| 6 | 3.69, d, J = 5.3 Hz, 4H | 63.60 | 3.69 H6; 4.10, H7 | 70.80, C7; 148.71 C9 |
| 7 | 4.11, dt, *J* = 10.6, 5.2 Hz, 1 H | 70.80 | 4.10, H7; 3.69 H6 | - |
| 8 | - | 148.27 | - | 3.20, H3; 148.27 C8 |
| 9 | - | 148.71 | - | 3.69, H6; 148.71 C9 |

ATR-FT-IR spectra provided further proof for the proposed chemical structure of BLER. Spectra were recorded both before and after polymerization with maleic anhydride. A broad band peaking at 3360 $cm^{-1}$ was assigned to O-H stretching of hydroxyl-groups present in the BL-backbone of uncured BLER. A band ranging from 2800 to 3000 $cm^{-1}$ was assigned to aromatic and non-aromatic C-H stretching vibrations, whereby corresponding bands due to aromatic C-C-stretching of lignols at 1505 $cm^{-1}$ and 1428 $cm^{-1}$ were also found. A band of comparatively weak intensity at 1728 $cm^{-1}$ was attributed to acetate-groups inherent to the structure of KL, providing further indirect evidence of the presence of lignin. Bands at 1255 $cm^{-1}$, 849 $cm^{-1}$ and 748 $cm^{-1}$ in uncured BLER are assigned to epoxide groups due to ring-stretching, and symmetric and asymmetric ring deformation, respectively. After hardening, a prominent band at 1729 $cm^{-1}$ was observed, which was assigned to esters formed from the reaction between the resin and hardener. Bands associated with an oxirane-ring were not detected after curing, indicating good conversion of the epoxy-groups in the resin system. Bands associated with hydroxyl groups were less pronounced after curing due to the formation of esters in an esterification of hydroxyl groups present in BL with the hardener. This type of cross linkage further contributes to the formation of the final polymer. The band at 1150 $cm^{-1}$ was assigned to C-O bonds of the 1,3-diphenoxypropan-2-ol units and ethers formed during thermosetting.

A mean EEW of 645 g/mol was determined by titration, in which HCl reacts with the epoxy-groups of the resin. No signals of epoxy moieties were detected after titration using $^1$H NMR, confirming the complete titration.

The following Table 2 shows EEWs of BLER. Three batches were determined by reacting epoxides contained in the resins with hydrochloric acid in acetone while sonicating the sample and titrating the non-reacted acid with NaOH after the reaction. The difference of NaOH solution that was consumed was used to calculate EEWs.

Table 2

| **Batch number** | **mass of resin diluted in 25 mL HCl-Ac [mg]** | **Mean ΔV [ml], σ [ml]** | **EEW [gmol$^{-1}$]** |
|---|---|---|---|
| 1 | 395.0 | 0.54,0.09 | 633 |
| 2 | 401.1 | 0.60, - | 713 |
| 3 | 320.0 | 0.58, 0.04 | 588 |

The chemical composition of the cured resin was determined using XPS. Three peaks were observed in the XPS C1s spectrum; the peak at a binding energy of 284.47 eV was assigned to aliphatic and aromatic C-C bonds, as well as C-H bonds, the peak at 286.23 eV to C-O bonds originating from ether-bonds and, extrapolating from the lack of related bands in the infrared spectrum, to a lesser extend hydroxy groups. The peak at 289.90 eV was assigned to carbonyls, in agreement with the FTIR spectra. No distinct peak for organic halogens was identified in the C1s scan. In the O1s spectrum the peak at 532.23 eV was assigned to C-O-H and C-O-C bonds and the peak at 533.79 eV to C=O

bonds. In the Cl2p scan the peak at 197.77 eV was assigned to ionic chlorine (Cl2p3/2) and that at 200.07 eV originates from doublet superposition of the ionic Cl2p1/2 and the organic Cl2p3/2 signals. The peak at 201.73 eV was assigned to organic (C-Cl) Cl2p1/2 peak. The presence of organic chlorine signals in the Cl2p-scan is indicative of an incomplete ring-closure to form the glycidyl moiety from the alpha-halo-alkoxide intermediate. Ionic chlorine is thought to originate from the phenyl-ammonium salt used as catalyst, being the counter ion to the charged nitrogen cation. This hypothesis is supported by the N1s spectra, where the peak at 399.54 was assigned to secondary and tertiary amines and that at 401.75 eV to the ammonium salts.

EA was additionally used to determine the composition of the polymerized resin (Table 3). Both methods showed that the majority of the cured resin's mass is composed of carbon and oxygen. The Cl content determined by EA was 13.32 wt.% compared to 5.27 wt.% by XPS. XPS spectra show that 38.2 % of the total chlorine in the cured resin exists as ionic chlorine. Upon the addition of the hardener prior to curing, the Cl content was reduced by 33%. Using the Cl content determined from EA, this reduction results in an organic chlorine content of 8.25 wt.% in cured resin and an organic chlorine content of 10.97 wt.% in uncured resin based on the ratio determined by XPS spectra and the chlorine content measured by EA. The following Table 3 shows the sample composition as determined by EA and XPS. Sulfur could not be detected in both methods.

Table 3

| Method | C (wt.%) | H (wt.%) | N (wt.%) | S (wt.%) | O (wt.%) | Cl (wt.%) | Rs (wt.%) |
|---|---|---|---|---|---|---|---|
| **EA** | 51.03 | 4.79 | 1.35 | 0.70 | 28.64 | 13.32 | < 0,3 |
| **XPS** | 56.05 | - | 0.74 | - | 37.93 | 5.27 | - |

**Mechanistic analysis of curing**

To be able to suggest a mechanism of curing for BLER-MA, DSC data was recorded. Two distinct exotherms were found. To attribute an exotherm to an occurring reaction a sample was partially cured by non-isothermally ramping the temperature to 150°C to record the full heat of reaction of the first exotherm. The sample was then dissolved in chloroform-d and NMR spectra recorded. By comparing the 1H NMR spectrum of BLER with the spectrum of partially cured BLER-MA, it was apparent that signals attributed to epoxides disappeared. Moreover, the signal of attributed to maleic anhydride also disappeared. The partially cured polymer shows during the cooling run a glass transition at 95°C. This observation leads to the conclusion that the first exothermic reaction up to 150°C is due to reaction of glycidyl units with maleic anhydride. After the first exothermic reaction, a new signal appeared in the $^1$H NMR spectrum at $\delta$ = 2.01 ppm. In the relevant HMBC spectrum, this signal has a cross peak to a carbon atom at $\delta$ = 130.00 ppm. In the corresponding HSQC spectrum, a cross-signal of this proton with a carbon nucleus was found at a shift of $\delta$ = 27.22 ppm. Due to the shift, it was deduced that it is likely a benzylic carbon bound to an aromatic structure containing substituents that have an inductive effect. Monolignols represent such substructures, due to the positive mesomeric effect of methoxy substituents on the aromatic structures. It was concluded that condensation must occur in between aromatics and carbonyls or alcohols during polymerization. Also signals in the aromatic region were shifted up-field after partial polymerization. These up-field-shifted signals were associated with aromatic compounds derivatized with alkyl-moieties, which were found due to condensation reactions. The signal at 4.11 ppm related to the 1,3-diphenoxypropan-2-ol-motif was more pronounced after partial polymerization. Three reactions were associated with the curing: 1) The reaction of glycidyle-ethers with maleic anhydride and 2) phenols, as well as 3) phenol-condensation with secondary alcohols and ketones.

**Thermal and mechanical characterization of cured BLER**

The physical and mechanical properties of the cured BLER are summarized in Table 4. To give a general impression of the appearance of cured BLER a duck-figurine (Fig. 2) was cast and cured at ambient pressure in a silicon mold. The curing protocol determined by non-isothermal DSC was used to cure all materials. In general, the polymer cures without gas enclosures and retains the dimensions of the mold. The formed polymer is black and smooth surfaces were obtained. No releasing agent was required and demolding was simple. The density of the polymer was found to be 1.43 g $cm^{-3}$, which is comparable to phenolic resins.

Thermogravimetric analysis was used to determine the thermal stability of the polymer in air. Up to 100°C, 3% of the initial weight was lost as water. The next mass loss step occurred at an onset temperature of 262°C, with maximum of the first derivate at 318°C. This loss of mass was attributed to oxidation and degradation of aliphatic parts of the polymer into volatiles. In a second step, the residual mass was lost with an onset at 484°C and a maximum of the first derivate of mass loss at 525°C. This event is attributed to the degradation of aromatics contained in cured resin. The lack of residual mass at 700°C showed that no inorganic compounds were present in the cured polymer.

The polymer was cured also in a DSC experiment from 20°C to 300°C and back. The temperature was ramped at a rate of 10°C per min. Full cure was deduced from the lack of the exotherms after the first run and the lack of an endotherm due to solidification during cooling. This behavior shows, that the polymer is a thermoset. The cured BLER has a broad glass transition temperature at 251°C on cooling and at 223° C during heating after full cure was achieved. Such values are in the range of glass transition temperatures of phenol resins and are considerably higher than values reported for epoxy-resins in general.

Three samples were tested to determine the Youngs modulus, maximum tensile stress and strain to failure of cured BLER. The materials are stiff and very brittle. The average Youngs modulus of cured BLER was determined to be 1.3 ± 0.7 GPa and average tensile strength was 40.8 ± 6.4 MPa. Compared to the density of the material, such values are typical for thermosets.

SEM images of fracture surfaces of the test specimens (Fig. 3) show that the polymer is homogeneous and not porous. The fracture surface is conchoidal, as has to be expected for amorphous brittle materials. No enclosed particles were observed, showing that the ionic compounds found in the XPS are dissolved in the polymer and did not crystallize during curing. Sporadic voids with diameters ranging from 450 nm to 1.3 μm were observed. As cracks did not propagate along voids, the presence of voids did not significantly affect the mechanical properties.

The following Table 4 shows a summary of cured BLER material properties. Density was determined by gas pycnometry. Mechanical properties were determined by tensile testing dog bone shaped specimens. Glass transition temperatures were determined by DSC runs of cured polymer and decomposition temperatures were determined by TGA.

Table 4

| Density [$gcm^3$] | Mechanical properties | | | Glass transition temperatures [°C] | | Decomposition temperatures [°C] | | | |
|---|---|---|---|---|---|---|---|---|---|
| | Youngs mod. [GPa] | Maximal elongation [%] | Maximal stress [MPa] | Heating | Cooling | First onset | First maximum | Second onset | Seond maximum |
| 1.43 | 1.32 | 2.82 | 40.77 | 251 | 223 | 261.9 | 318.4 | 484.3 | 525.4 |

In summary, Kraft lignin was treated with epichlorohydrin, aniline and NaOH to produce a liquid prepolymer. Kraft lignin was used as received and was emulsified with epichlorohydrin and aniline resulting in an organic phase in which the prepolymer in formed without the incorporation of inorganic Kraft liquor components. The addition of a small amount of aniline makes the use of stoichiometric amounts of acid or additional solvent obsolete. The prepolymer thus obtained can then be cured with maleic anhydride as hardener at elevated temperatures. The curing occurs in two stages, initially glycidyl ethers react with the curing agent, while in the second phase, aromatic compounds contained in lignin undergo a condensation with carbonyl groups or alcohols. This results in a thermoset resin with mechanical and physical properties comparable to commercial phenolic resins.

**Example 2** - **Black liquor epoxy resin synthesis with pyridine**

The method of synthesizing a black liquor epoxy resin was performed as described in Example 1 but with pyridine instead of aniline.

**Example 3** - **Preparation of solid BLER-paper composites**

A typical composite of solid BLER with paper was prepared from the solid part produced during the synthesis of BLER. The solid part was filtered from the liquid portion of the reaction after reflux and dried at 10 mbar and 90°C for 24h. The resulting powder was then mixed with hardener (maleic anhydride) and filled in a mold. A layer 5 mm thick of resin was used per sheet of paper. Commercially available Whatman filter paper was used as paper. The material was cured in a hot press at a pressure of 5 metric tons/$m^2$ and 140°C for 24 hours. Scanning electron microscopy (SEM) was used to investigate the interface of the two components after curing of the composite material. A picture is depicted in Fig. 4. The two components of the composite are marked respectively in the picture. Binding in between the two components was found.

The resulting composite material was tested for its mechanical properties. A Youngs modulus in the range of 1.1 GPa to 1.9 GPa was found and an elongation until breaking of the sample of 0.6 % of its initial length.

**References:**

[1] Z. He, Y. Wang, T. Zhao, Z. Ye, H. Huang, Anal Methods 2014, 6, 4257-4261.

[2] C. Powell, 1989, DOI 10.18434/T4T88K.

[3] Y. Toda, K. Tanaka, R. Matsuda, H. Suga, Chem. Lett. 2019, 48, 1469-1471.

[4] Derek Stewart, Lignin as a base material for materials applications: Chemistry, application and economics, Industrial Crops and Products, Volume 27, Issue 2, 2008, Pages 202-207, ISSN 0926-6690

[5] James G. Speight, Chapter 13 - Upgrading by Gasification, Editor(s): James G. Speight, Heavy Oil Recovery and Upgrading, Gulf Professional Publishing, 2019, Pages 559-614, ISBN 9780128130254


## Claims

1. A method for preparing a black liquor epoxy resin, comprising

    a. preparing a mixture of black liquor, epichlorohydrin, and a primary or a heterocyclic amine,
    b. heating the mixture to its reflux point,
    c. adding a base to the mixture,
    d. continue to heat the mixture at reflux, and
    e. separating the black liquor epoxy resin from the mixture.

2. The method of claim 1, wherein the primary amine is aniline and the heterocyclic amine is pyridine.

3. The method according to claim 1 or 2, wherein the base is selected from the group consisting of a metal base, an alkali metal base, an alkaline earth metal base, an organic carbonate, an inorganic carbonate, a hydroxy organic base, an organic amine, an alkoxide, an organic base, aliphatic amines, aromatic amines, heterocyclic amines, and mixtures thereof.

4. The method according to any one of claims 1 to 3, wherein the base is sodium hydroxide, potassium hydroxide,

calcium hydroxide, magnesium hydroxide, lithium hydroxide, aluminum hydroxide, cesium hydroxide, sodium oxide, potassium oxide, calcium oxide, magnesium oxide, lithium oxide, cesium oxide, sodium carbonate, potassium carbonate, calcium carbonate, magnesium carbonate, lithium carbonate, cesium carbonate, ammonium carbonate, sodium methoxide, sodium isopropanolate, sodium ethoxide, potassium methoxide, potassium isopropanolate, potassium ethanolate, triethylamine, diazabicycloundecene (DBU), dimethylaminopyridine (DMAP), piperidines, piperazines, pyridine, pyridine derivatives, picolines, lutidines, collidines, 1,4-diazabicyclo[2.2.2]octan (DABCO), imidazole, a derivative thereof, or a mixture thereof.

**5.** The method according to any of claims 1 to 4, wherein the ratio of black liquor to epichlorohydrin is in the range of 0.5:2 to 2:0.5 (v/v), preferably 1:1 (v/v).

**6.** The method according to any of claims 1 to 5, wherein the ratio of black liquor to amine is in the range of 100:1 to 25:1 (v/v).

**7.** The method according to any of claims 1 to 6, wherein the black liquor epoxy resin is separated from the reaction mixture by extraction with an organic solvent.

**8.** A black liquor epoxy resin comprising etherified lignin, an ammonium salt and/or amine.

**9.** The black liquor epoxy resin of claim 8 as a liquid.

**10.** Use of the black liquor epoxy resin of claim 8 or claim 9 as a coating resin, matrix for the production of composite materials, thermosetting polymeric material, polymer blend, or as a lacquer or varnish.

**11.** A thermosetting composition comprising the cured black liquor epoxy resin of claim 8 or 9.

**12.** The thermosetting composition of claim 11 having a decomposition temperature ranging from 80° to 300 °C and glass transition temperatures ranging from -80°C to above 200° C.

**13.** A method for preparing a thermosetting composition of claim 11 or 12, comprising curing the black liquor epoxy resin obtained by the method of any one of claims 1 to 7 with an acid, an acid anhydride, a thiol, or an amine as curing agent.

**14.** A composite material comprising the black liquor epoxy resin of claim 8 or 9.

**15.** The composite material of claim 14, further comprising a cellulose-based material.

Fig. 1

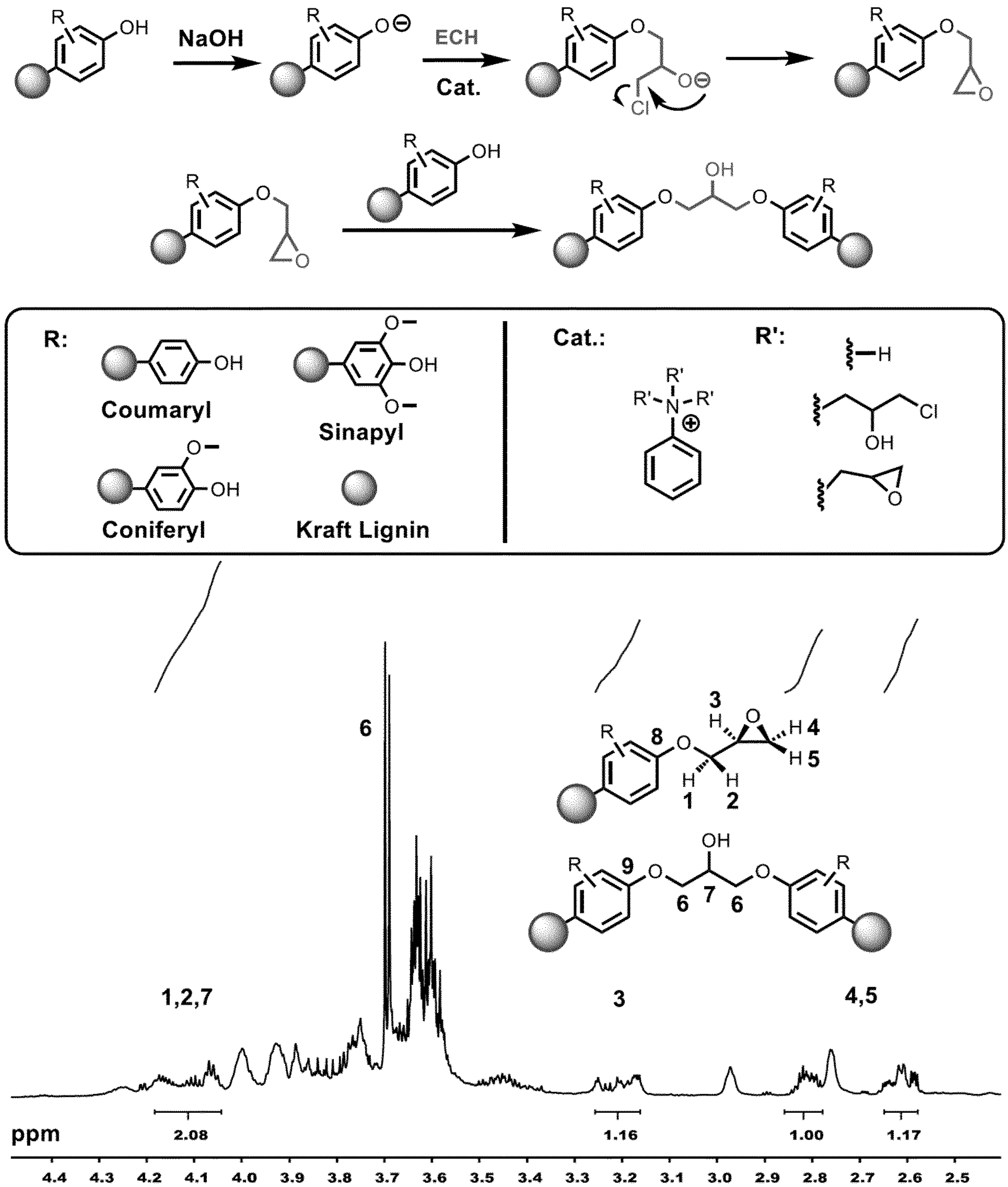
NaOH
ECH
Cat.
R:
Coumaryl
Sinapyl
Coniferyl
Kraft Lignin
Cat.:
R':
6
1,2,7
3
4,5
2.08
1.16
1.00
1.17
ppm
4.4 4.3 4.2 4.1 4.0 3.9 3.8 3.7 3.6 3.5 3.4 3.3 3.2 3.1 3.0 2.9 2.8 2.7 2.6 2.5

Fig. 2

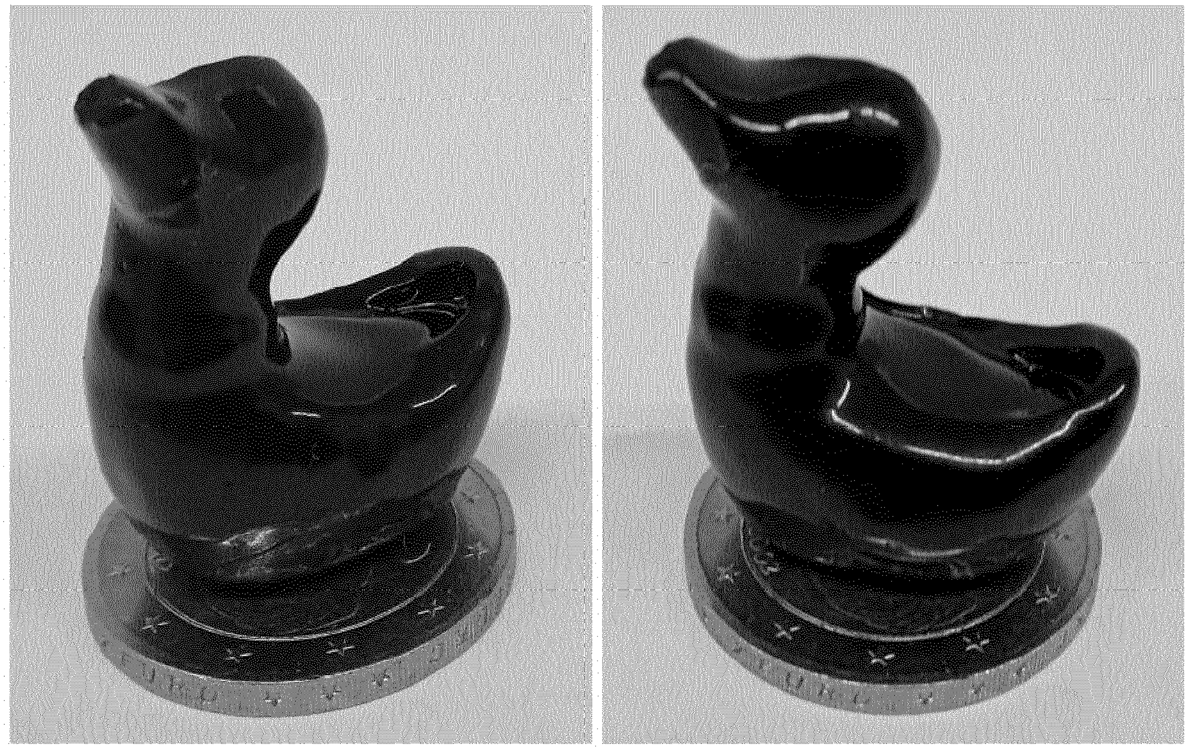

Fig. 3

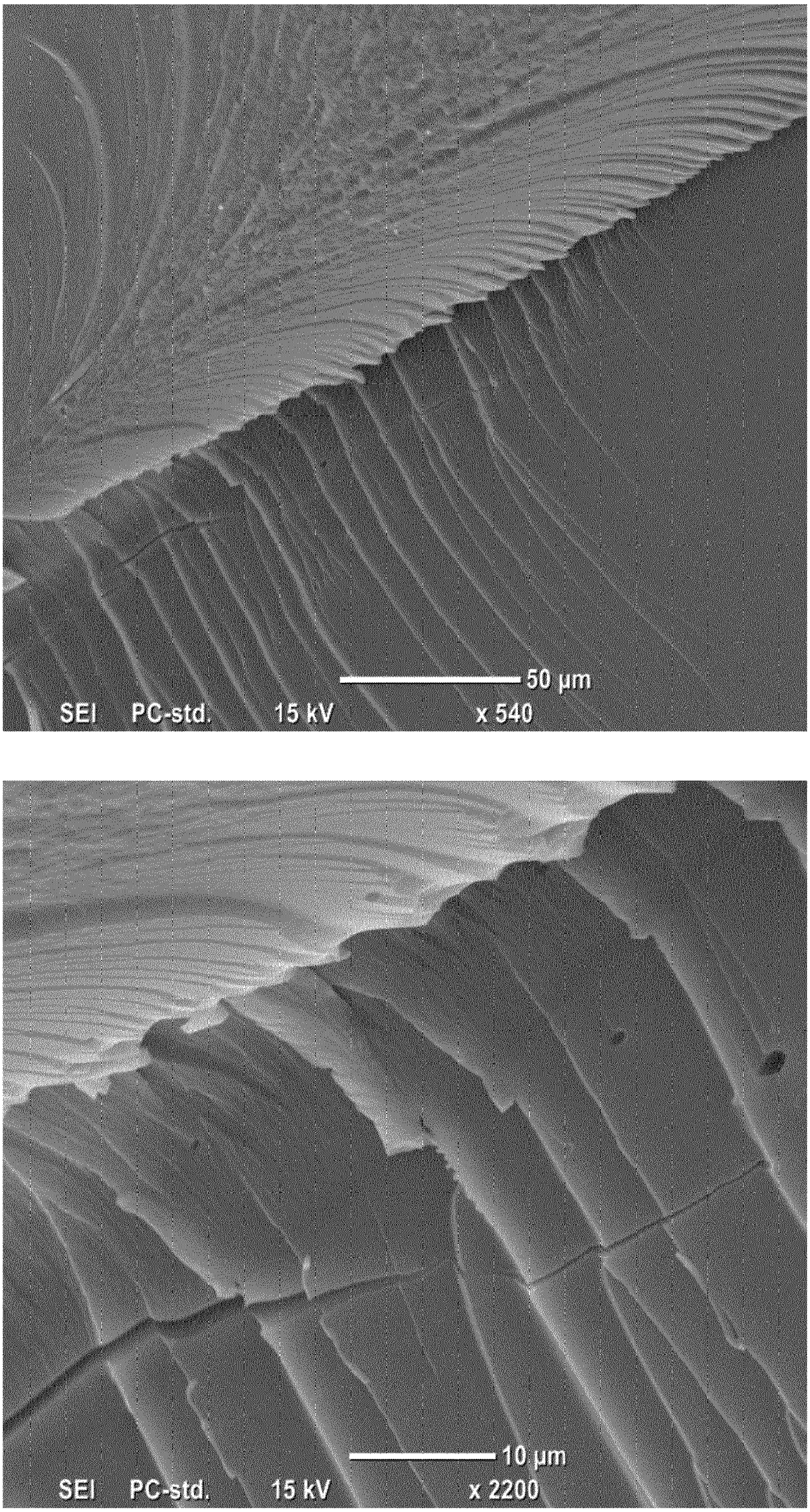

Fig. 3 cont.

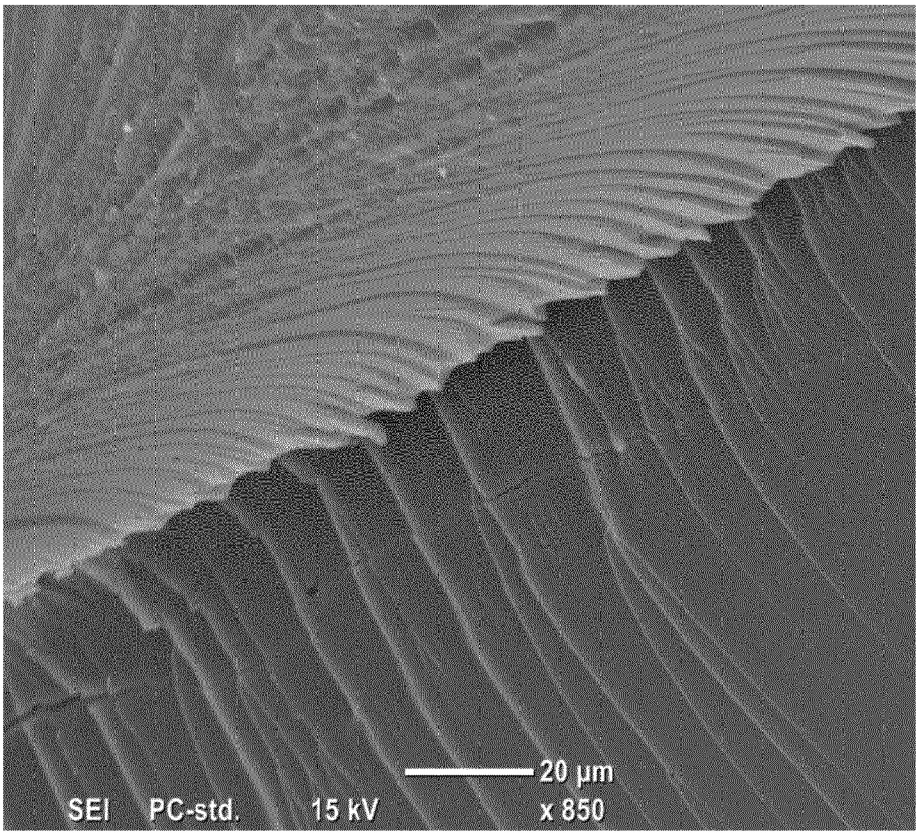


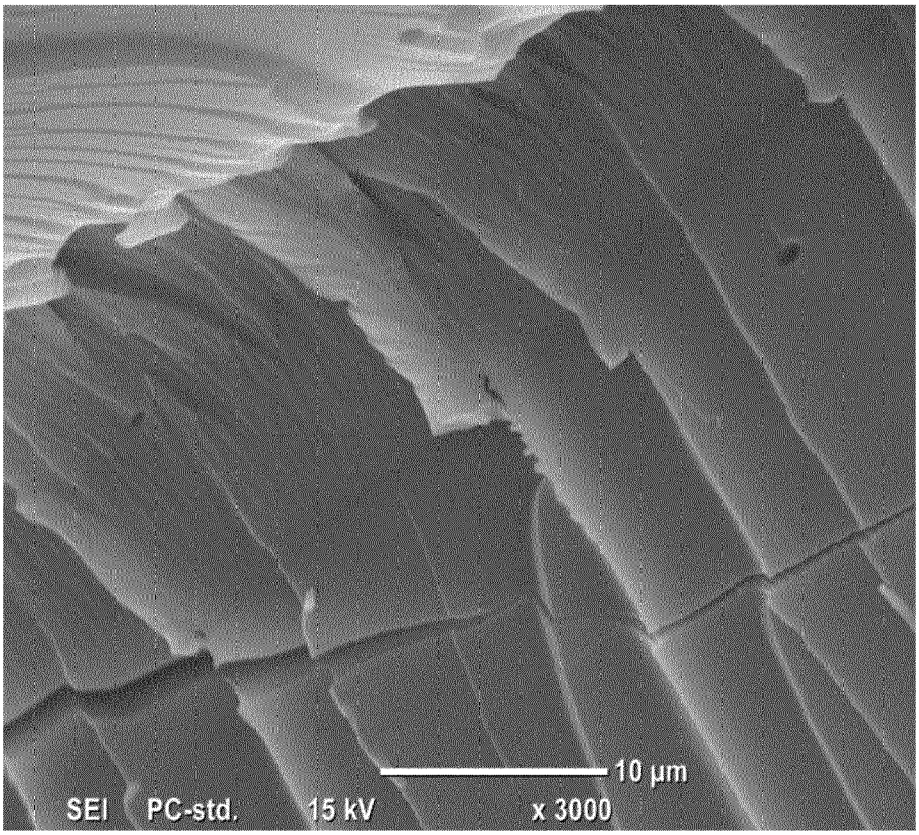

Fig. 4

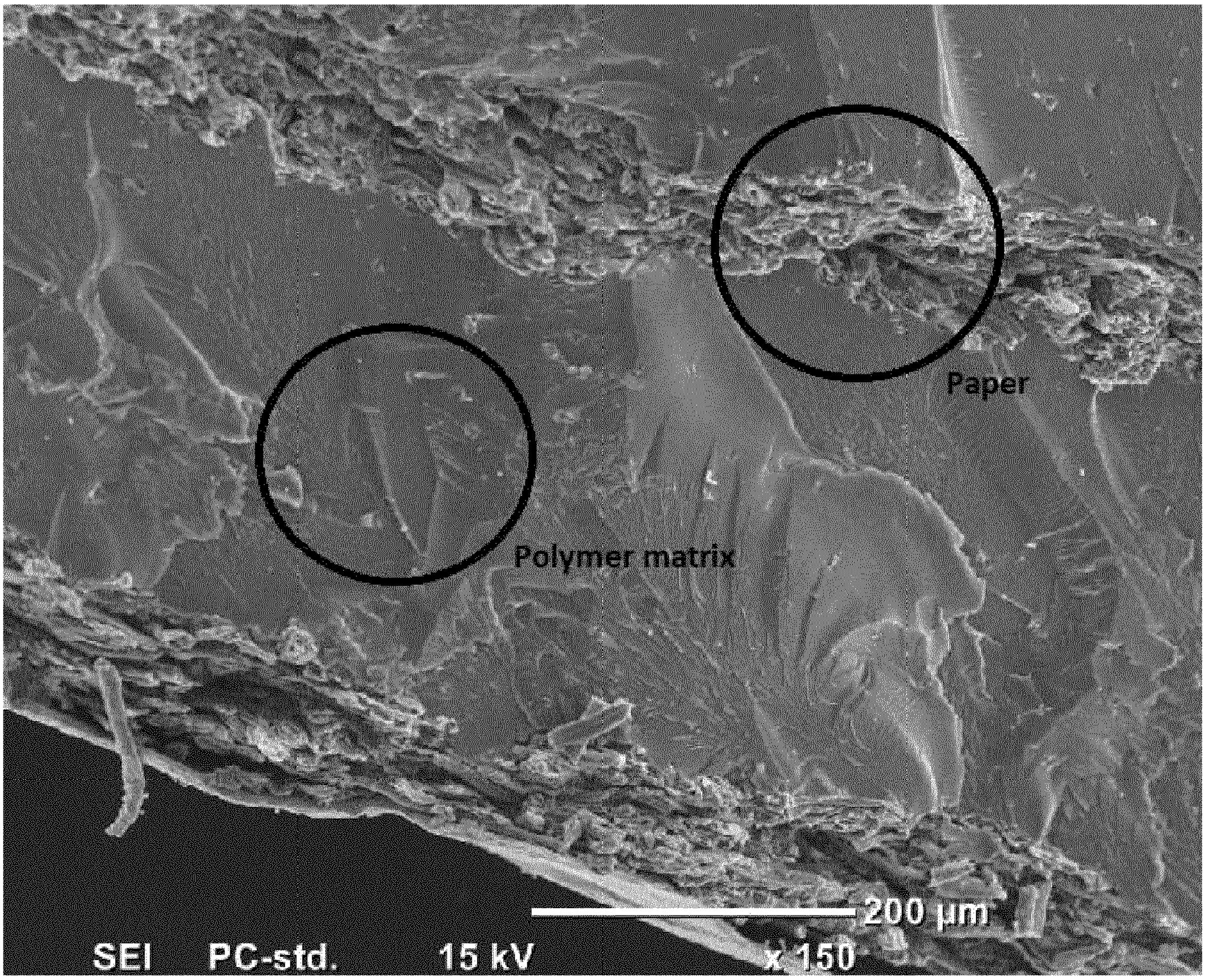

Europäisches Patentamt
European Patent Office
Office européen des brevets

# EUROPEAN SEARCH REPORT

Application Number
EP 22 19 6916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 3 984 363 A (D ALELIO GAETANO F) 5 October 1976 (1976-10-05) * column 1; examples 1,4,9,10,11,15 * ----- | 1-15 | INV. C07G1/00 C08H8/00 C08L97/00 C08H7/00 C08G59/06 C08G59/10 |

TECHNICAL FIELDS SEARCHED (IPC)

C07G
C07B
C09J
C08H
C08L
C08G

The present search report has been drawn up for all claims

1

| Place of search | Date of completion of the search | Examiner |
|---|---|---|
| The Hague | 20 December 2022 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 19 6916

This annex lists the patent family members relating to the patent documents cited in the above-mentioned European search report. The members are as contained in the European Patent Office EDP file on
The European Patent Office is in no way liable for these particulars which are merely given for the purpose of information.

20-12-2022

| Patent document cited in search report | Publication date | Patent family member(s) | Publication date |
|---|---|---|---|
| US 3984363 A | 05-10-1976 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3984363 A


### Non-patent literature cited in the description


- **Z. HE ; Y. WANG ; T. ZHAO ; Z. YE ; H. HUANG.** *Anal Methods,* 2014, vol. 6, 4257-4261
- **Y. TODA ; K. TANAKA ; R. MATSUDA ; H. SUGA.** *Chem. Lett.,* 2019, vol. 48, 1469-1471
- **DEREK STEWART.** Lignin as a base material for materials applications: Chemistry, application and economics. *Industrial Crops and Products,* 2008, vol. 27 (2), ISSN 0926-6690, 202-207
- Upgrading by Gasification. **JAMES G. SPEIGHT.** Heavy Oil Recovery and Upgrading. Gulf Professional Publishing, 2019, 559-614